(19) **Europäisches Patentamt**
**European Patent Office**
**Office européen des brevets**

(11) **EP 2 385 872 B1**

(12) **FASCICULE DE BREVET EUROPEEN**

(45) Date de publication et mention
de la délivrance du brevet:
**25.03.2015 Bulletin 2015/13**

(51) Int Cl.:
***B01D 53/02*** *(2006.01)*   ***C04B 35/453*** *(2006.01)*
***B01J 20/06*** *(2006.01)*

(21) Numéro de dépôt: **09793561.3**

(22) Date de dépôt: **03.12.2009**

(86) Numéro de dépôt international:
**PCT/FR2009/001374**

(87) Numéro de publication internationale:
**WO 2010/079264 (15.07.2010 Gazette 2010/28)**

(54) **PREPARATION D'UN SOLIDE A BASE D'OXYDE DE ZINC UTILISABLE POUR LA PURIFICATION D'UN GAZ OU D'UN LIQUIDE**

HERSTELLUNG EINES FESTSTOFFE ENTHALTENDEN ZINKOXIDS ZUR VERWENDUNG BEI DER REINIGUNG EINES GASES ODER EINER FLÜSSIGKEIT

PREPARATION OF A SOLID CONTAINING ZINC OXIDE USED FOR PURIFYING A GAS OR A LIQUID

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **12.01.2009 FR 0900106**

(43) Date de publication de la demande:
**16.11.2011 Bulletin 2011/46**

(73) Titulaire: **IFP Energies nouvelles**
**92852 Rueil-Malmaison Cedex (FR)**

(72) Inventeurs:
• **BAZER-BACHI, Delphine**
**F-69230 Saint-Genis-Laval (FR)**
• **CHICHE, David**
**F-69007 Lyon (FR)**
• **LOPEZ, Joseph**
**F-30340 Saint Julien les Rosiers (FR)**
• **LELIAS, Marc-Antoine**
**F-30100 Alès (FR)**

(56) Documents cités:
**EP-A- 0 401 789   US-A- 4 088 736**
**US-A- 5 143 706   US-A- 5 178 843**
**US-A- 5 219 542   US-A- 5 597 540**

Remarques:
Le dossier contient des informations techniques présentées postérieurement au dépôt de la demande et ne figurant pas dans le présent fascicule.

## Description

La présente invention concerne le domaine des masses de captation ou absorbants et également celui de la purification des effluents gazeux et liquides tels que les charges d'hydrocarbures liquides, les gaz naturels, les gaz de synthèse contenant entre autres des impuretés soufrées telles que l'$H_2S$, le COS, et/ou le $CS_2$, ou des impuretés halogénées telles que l'HCl. Dans la suite du texte, et par souci de simplification, les termes masse de captation, adsorbant ou solide sont utilisés pour désigner indifféremment ledit matériau.

Plus précisément, l'invention a pour objet un procédé de préparation en plusieurs étapes d'une masse de captation à base de ZnO. Le solide obtenu se présente sous forme de particules extrudées contenant au moins du ZnO ainsi qu'au moins un liant. Grâce au mode de préparation selon l'invention, les solides obtenus présentent de très bonnes propriétés de résistance mécanique, adaptées à une mise en oeuvre en lit fixe, ainsi que des capacités d'absorption en soufre et en HCl améliorées.

## Art antérieur

Les gaz de synthèse peuvent classiquement être obtenus par transformation du gaz naturel, du charbon, de résidus pétroliers lourds ou de la biomasse par des procédés tels que le vaporeformage, le reformage autotherme, ou l'oxydation partielle, ou encore par décomposition du méthanol. Les gaz de synthèse peuvent également être obtenus par gazéification de mélanges de biomasse et/ou charbon et/ou résidus pétroliers (gaz de synthèse obtenus par "co-processing" selon la terminologie anglo-saxonne).

Il s'agit généralement de mélanges comprenant du monoxyde de carbone, de l'hydrogène, de la vapeur d'eau et du dioxyde de carbone. En fonction du type de charge à partir de laquelle ils sont obtenus, les gaz de synthèse contiennent des teneurs variables d'impuretés telles que par exemple des composés soufrés comme l'$H_2S$, le COS et/ou le $CS_2$, ainsi que des halogènes comme le chlore sous forme HCl.

Les impuretés soufrées ainsi que l'HCl présents dans les gaz de synthèse non purifiés peuvent entraîner une corrosion accélérée des installations dans lesquelles ils sont mis en oeuvre, telles que par exemple les turbines à gaz dans les unités de cogénération de gaz de synthèse et d'électricité (IGCC ou "Integrated Gasification Combined Cycle" selon la terminologie anglo-saxonne). D'autre part, les gaz issus d'une installation de cogénération doivent également répondre à des spécifications bien particulières, liées aux exigences des procédés placés en aval. Les composés soufrés ainsi que les halogénés sont des constituants souvent rencontrés qu'il est nécessaire d'éliminer efficacement.

Ces impuretés sont également susceptibles d'empoisonner les catalyseurs mis en oeuvre par exemple dans les procédés de synthèse Fischer-Tropsch ou dans les procédés de synthèse chimique tels que les procédés de synthèse du méthanol, ou encore d'atténuer les performances des matériaux utilisés dans les piles à combustibles.

A ce titre, les exigences en terme de pureté des gaz sont très sévères. Il s'agit donc d'éliminer ces impuretés soufrées et halogénées, outre les autres types d'impuretés qu'il convient également d'éliminer, afin que le gaz n'en contiennent plus qu'à des teneurs résiduelles. Certaines applications, telles que par exemple la synthèse Fischer-Tropsch, imposent des teneurs généralement inférieures à 10 ppb poids pour chaque constituant.

L'$H_2S$ présent dans les gaz naturels, parfois à hauteur de 20% volume, est généralement éliminé à l'aide de procédés de type Claus. A la suite de ce traitement, il subsiste généralement dans le gaz naturel des teneurs en $H_2S$ pouvant être non négligeables selon l'application visée (reformage du gaz naturel pour la production d'hydrogène ou de gaz de synthèse par exemple).

Les charges liquides telles que les hydrocarbures utilisés par exemple comme charge des unités de reformage catalytique, des unités d'isomérisation, ou des unités d'hydrogénation contiennent des impuretés soufrées telles que l'$H_2S$ ainsi que le COS et le $CS_2$ qu'il s'agit d'éliminer afin de protéger les catalyseurs mis en oeuvre dans les unités dans lesquelles elles sont employées. Des contraintes environnementales imposent également l'élimination de ces impuretés.

L'HCl fait également partie des impuretés présentes dans les naphtas et les gaz provenant d'unités de reformage, parfois à hauteur de 20 ppm poids.

L'utilisation de solide tel qu'un adsorbant ou une masse de captation est une des techniques communément utilisée pour la purification des gaz ou liquide. Selon cette technique, dans le cas des composés soufrés les impuretés à éliminer interagissent chimiquement avec les oxydes métalliques contenus dans la masse de captation pour former un sulfure. Parmi les solides utilisés comme masse de captation figurent par exemple des oxydes à base de cuivre, de zinc, de magnésium, de fer ou de manganèse. L'alumine et la silice peuvent être utilisées comme support ou liant.

Le brevet FR 2 295 782 B1 a pour objet une masse solide utilisable pour l'absorption de sulfure d'hydrogène (H2S) et le cas échéant, de sulfure et d'oxysulfure de carbone (CS2, COS), ladite masse contenant de 20 à 85% poids d'oxyde de zinc, calculé en ZnO, de 0,9 à 50% d'alumine, calculé en $Al_2O_3$, et de 2 à 45% d'oxyde de métal du groupe IIA, calculé en oxyde. Elle est préparée par mélange d'un composé du zinc, d'au moins un composé de l'aluminium et d'au moins un composé de métal du groupe IIA, de préférence un composé du calcium. La masse solide décrite dans ce brevet présente une résistance mécanique suffisante pour des teneurs en ZnO allant jusqu'à 80% poids; au-delà de cette teneur, la résistance mécanique devient trop faible et ne permet pas une utilisation en lit fixe.

Le brevet US 4 071 609 décrit une méthode de préparation d'une masse de captation composée exclusivement de ZnO. Les particules constituant la masse sont obtenues par granulation à partir d'une poudre d'oxyde de zinc et d'eau, sans ajout de liant, la granulation conduisant à la formation d'agglomérats de ZnO qui sont ensuite convertis en carbonate de zinc basique par traitement sous flux de $CO_2$. Le carbonate ainsi formé est finalement décomposé par un traitement thermique sous air, à une température comprise entre 200 et 500°C, pour conduire à la formation de ZnO, le traitement thermique permettant de conférer aux particules une surface spécifique et une résistance mécanique accrues.

Par ailleurs, les brevets FR 2 718 658 B1 et US 5 866 503, décrivent des pastilles d'absorbant comprenant un mélange d'un oxyde métallique réactif qui peut être l'oxyde de zinc, d'un oxyde métallique inerte diluant, d'une silice de haute surface spécifique et d'un liant. La teneur en oxyde de zinc des pastilles est généralement comprise entre 30 %poids et 60 ou 65 %poids. Par ailleurs, ces masses de captation sont mises en oeuvre sous forme de pastilles à une température de désulfuration minimale de 426°C pour le brevet français, et de 315°C pour le brevet américain.

Concernant la déhalogénation (élimination des composés halogénés) en général, classiquement des masses de captation telles que des solides à base de dolomite, des zéolithes, des alumines basiques ou traitées avec des métaux alcalins, ou bien encore des oxydes de zinc peuvent être utilisées. L'utilisation d'alumines traitées, par exemple avec des alcalins, des alcalino-terreux, des terres rares, et/ou des métaux de transition, est la plus courante pour purifier des gaz.

Le brevet US 4 088 736 divulgue un procédé de préparation d'un solide comprenant du ZnO et de l'alumine et des oxydes de métaux du groupe IIA. Toutefois, le brevet ne divulgue pas que la pression d'extrusion de la pate est comprise entre 3 et 10MPa, ni la présence d'un agent basique comme agent peptisant. En effet, le nitrate de calcium utilisé dans la solution peptisante de l'exemple E dudit brevet est acide lorsqu'il est mis en solution comme cela est le cas dans l'exemple E. De plus l'agent de nitrate de chrome rend cette solution encore plus acide. Par ailleurs, le brevet US 4 088 736 ne décrit pas l'utilisation dudit solide pour traiter des gaz halogénés.

## Résumé de l'invention:

Le procédé de préparation selon l'invention permet d'obtenir des solides à base de ZnO pouvant être utilisés pour la désulfuration et/ou l'élimination des composés halogénés de charges gazeuses et liquides. En particulier, les solides obtenus selon ledit procédé présentent des propriétés de résistance mécanique élevées, et ceci même dans le cas des solides pour lesquels la teneur en ZnO est supérieure à 85% en poids.

Une seule méthode de préparation peut donc être utilisée quelque soit la teneur en ZnO, qui permet d'obtenir des solides présentant une bonne résistance mécanique et donc utilisables en lit fixe.

Le procédé selon l'invention comprend au moins les étapes selon la revendication 1.

Ledit procédé de préparation permet d'obtenir des solides présentant des capacités en soufre accrues, qui peuvent avantageusement être utilisés pour désulfurer toutes charges gazeuse ou liquide comportant de l'$H_2S$. Ils permettent en outre d'éliminer le COS et/ou le $CS_2$ éventuellement présents. Les solides obtenus selon ledit procédé dont la teneur en ZnO est supérieure à 85% en poids sont particulièrement adaptés à cette utilisation.

En particulier, le solide obtenu peut être employé pour purifier par exemple des gaz naturels, des gaz de synthèse mis en oeuvre dans les procédés de synthèse chimique, les procédés de synthèse Fischer-Tropsch, les unités de cogénération, ainsi que des hydrocarbures liquides.

Un autre avantage du solide selon l'invention est qu'il présente une capacité de sulfuration élevée dès 150°C, et permet ainsi d'épurer un gaz de synthèse de manière très poussée dans des conditions avantageuses, car identiques en terme de pression, de température et de débit à celles mises en oeuvre dans l'unité Fischer-Tropsch située en aval. De plus le solide ainsi préparé peut être éventuellement régénéré après utilisation.

En outre, le procédé selon l'invention permet d'obtenir des solides présentant une capacité d'élimination des composés halogénés (par exemple capacités de déchloration) améliorée dès les basses températures, c'est-à-dire à partir de 20°C, et permettent ainsi d'épurer un gaz ou un liquide dans des conditions représentatives d'un gaz ou d'un liquide en sortie d'une colonne de stabilisation d'un reformer catalytique. Dans ce cas de figure, un solide possédant une teneur en ZnO comprise entre 30 %poids et 95 %poids, de préférence entre 40 %poids et 90 %poids peut être avantageusement utilisé.

## Description détaillée

L'invention a pour objet un procédé de préparation d'un solide à base d'oxyde de zinc permettant d'éliminer des impuretés soufrées et halogénées d'un gaz, comprenant les étapes suivantes :

a) prémélange des poudres comprenant au moins une poudre de ZnO et au moins un liant,

b) malaxage d'une pâte obtenue par:

    i. mise en contact des poudres prémélangées, et d'une solution contenant un agent peptisant, conduisant à l'obtention d'une pâte (peptisation),

    ii. malaxage de la pâte,

c) extrusion de la pâte obtenue à l'étape b) à une pression comprise entre 3 et 10 MPa,

d) séchage des extrudés obtenus à l'étape c) à une température comprise entre 70 et 160°C sur une durée comprise entre 1 et 24 heures,

e) calcination des extrudés séchés à une température comprise entre 200 et 800°C sur une durée variant entre 1 et 6 heures, sous un flux gazeux comprenant de l'oxygène.

Ledit solide à base d'oxyde de zinc se présente sous la forme de particules extrudées comprend au moins :

- 30 % poids à 98 % poids, de préférence 40 % poids à 97 % poids, de manière plus préférée 60 % poids et 95 % poids, et de manière très préférée entre 85 % poids à 95 %poids de ZnO,
- 1 % poids à 70%, de préférence 3 % poids à 60 % poids, de manière plus préférée 5 % poids à 40 % poids, et de manière très préférée 5 %poids à 15 %poids d'un liant.

Ces teneurs en % poids sont exprimées par rapport au poids total du solide préparé au moyen du procédé selon l'invention.

Le procédé de préparation du solide selon l'invention permet d'obtenir des solides dont la résistance mécanique mesurée par le test d'écrasement grain à grain (EGG) est supérieure ou égale à 0,9 daN.mm$^{-1}$ quelle que soit la teneur en ZnO mise en oeuvre.

De plus, les solides obtenus présentent des performances de désulfuration améliorées vis-à-vis du traitement des gaz et des liquides contenant les composés $H_2S$, COS et $CS_2$.

En particulier lesdits solides présentent une capacité en soufre avant perçage, mesurée par un test de perçage réalisé avec un gaz composé de 0,9% d$H_2S$ dans de l'hydrogène, à une température de 200°C, à pression atmosphérique, avec une vitesse volumique horaire de 2600 h$^{-1}$, supérieure à 0,06 gramme de soufre par gramme de solide, voire à 0,08 ou encore 0,10 gramme de soufre par gramme de solide, et avantageusement supérieure à 0,12 gramme de soufre par gramme de solide.

En outre, les solides préparées au moyen du procédé selon l'invention présentent des performances en élimination des composés halogénés améliorées, notamment pour ce qui concerne le traitement des gaz et des liquides contenant du chlorure d'hydrogène ou de l'acide chlorhydrique (HCl). En particulier, lesdits solides présentent une capacité en chlore, également mesurée par un test de perçage avec un gaz composé de 500 ppm volume d'$H_2O$ et de 500 ppm volume d'HCl dans l'azote, à une température de 30°C, à pression atmosphérique, avec une vitesse volumique horaire (WH) de 1600 h$^{-1}$, supérieure à 0,08 g de chlore par gramme de solide, voire à 0,10 g de chlore par gramme de solide, voire encore supérieure à 0,20 g de chlore par gramme de solide, et avantageusement supérieure à 0,25 g de chlore par gramme de solide.

Concernant l'utilisation du solide préparé au moyen du procédé selon l'invention dans un procédé de désulfuration, la teneur en ZnO dudit solide est de préférence comprise entre 60 %poids et 95 %poids, et de manière très préférée entre 85 %poids et 95 %poids de ZnO,

Concernant l'utilisation du solide préparé au moyen du procédé selon l'invention dans un procédé de déhalogénation, la teneur en ZnO dudit solide est de préférence comprise entre 30 %poids et 98 %poids, de manière plus préférée entre 40 %poids et 80 %poids, de manière plus préférée entre 50 %poids et 70 %poids de ZnO.

Source de ZnO :

Les sources de ZnO commerciales sont généralement issues de deux grands procédés industriels de fabrication de l'oxyde de zinc: le procédé indirect ou procédé français et le procédé direct ou américain.

Initialement préféré, le procédé français consiste, à la base, en un chauffage du zinc au voisinage de son point d'ébullition. Les vapeurs ainsi générées sont oxydées par combustion dans l'air. La fleur de zinc est aspirée par des ventilateurs et envoyée dans de grandes chambres où les particules se trouvent classifiées grâce à des cloisons en fonction de leur taille. Ce procédé conduit à des produits d'une très grande pureté dont la qualité ne dépend que de là pureté initiale du métal.

L'origine du procédé direct remonte à 1852 (The New Jersey Zinc Company). Dans ce cas, la matière première est le minerai de zinc, c'est à dire souvent des sulfures, des carbonates ou des silicates de zinc. Ce minerai, mélangé à du charbon est chargé dans un four où circule un courant d'air. La chaleur issue de la combustion du charbon permet la réduction du minerai et la volatilisation du zinc. Ces vapeurs sont alors oxydées par l'anhydride carbonique ou l'oxygène envoyé en excès. Comme pour le procédé français, les fumées d'oxyde sont aspirées et conduites dans de vastes espaces pour récupérer des particules classifiées par taille. Bien plus économique, ce procédé conduit toutefois à un oxyde de zinc moins pur.

De nombreuses autres méthodes de préparation sont décrites dans la littérature : par exemple, par déshydratation d'hydroxyde de zinc obtenu par précipitation, par décomposition des différents précurseurs du zinc, qu'ils soient commerciaux ou obtenus par une précipitation préliminaire.

Les oxydes de zinc commerciaux peuvent être mis en oeuvre dans la fabrication du solide ou masse de captation selon l'invention. Les poudres d'oxyde de zinc utilisées pour la fabrication du solide selon l'invention présentent habituellement une surface spécifique (déterminée par adsorption-désorption d'azote) comprise entre 10 et 80 m$^2$/g environ, le plus souvent entre 30 et 60 m$^2$/g.

Liant :

Lors de la fabrication du solide selon l'invention, la poudre de ZnO est associée à au moins un liant afin de permettre la mise en forme dudit solide et de lui conférer une bonne résistance mécanique.
La proportion de liant mise en oeuvre lors de la fabrication est inférieure ou égale à 60% poids (exprimée sur la base de la matière sèche totale), et dépend de l'application ciblée. de préférence inférieure ou égale à 5% poids.

Concernant l'application du solide selon l'invention dans un procédé de désulfuration, la teneur en liant des particules est de préférence comprise entre 1 % poids et 15% poids.
Concernant l'application du solide selon l'invention dans un procédé de déhalogénation, la teneur en liant des particules est de préférence comprise entre 20 et 60% poids et de manière encore plus préférée, celle-ci est comprise entre 30 et 50% poids.

Le solide selon l'invention comprend au moins un liant. On pourra utiliser les liants bien connus de l'Homme du métier; de façon avantageuse, par exemple, choisi parmi une alumine ou un précurseur d'alumine, qui est préférentiellement de la boehmite, de la silice, ou une argile telle que par exemple une kaolinite, une montmorillonite, une bentonite ou une smectite. Il est tout à fait possible de combiner un liant de type "alumine" et un liant de type "argile". Selon un mode préféré de fabrication du solide selon l'invention, le liant est une argile de type kaolinite, l'argile de Provins par exemple.

Procédé de préparation :

Le solide préparé au moyen du procédé selon l'invention est obtenu en mettant en contact au moins une poudre de ZnO, un liant et une solution contenant un agent peptisant selon un procédé particulier.

L'invention concerne donc un procédé de préparation d'un solide comprenant du ZnO et un liant, dans lequel ledit procédé comprend les étapes suivantes :

    a) prémélange des poudres comprenant au moins une poudre de ZnO et au moins un liant,
    b) malaxage d'une pâte obtenue par:

        i. mise en contact des poudres prémélangées, et d'une solution contenant un agent peptisant, conduisant à l'obtention d'une pâte (peptisation),
        ii. malaxage de la pâte,

    c) extrusion de la pâte obtenue à l'étape b) à une pression comprise entre 3 et 10 MPa,
    d) séchage des extrudés obtenus à l'étape b) à une température comprise entre 70 et 160°C sur une durée comprise entre 1 et 24 heures,
    e) calcination des extrudés séchés à une température comprise entre 200 et 800°C sur une durée variant entre 1 et 6 heures, sous un flux gazeux comprenant de l'oxygène.

Description de l'étape a :

L'étape a consiste en un mélange des poudres, de préférence à sec, par exemple dans un malaxeur ou dans tout autre type de mélangeur. Cette étape, effectuée de préférence sans ajout de liquide, permet d'obtenir un mélange homogène des constituants pulvérulents.

Description de l'étape b :

L'étape b consiste en la mise en contact des poudres pré mélangées lors de l'étape a avec une solution contenant un agent peptisant. Cette étape, qui permet l'obtention d'une pâte, a pour but la peptisation des constituants. L'étape b, qui comprend une peptisation, peut être mise en oeuvre selon deux variantes de la présente invention, qui diffèrent par la constitution de la solution mise en oeuvre lors de ladite étape.

Selon l'invention, la peptisation est mise en oeuvre à l'aide d'une solution contenant un agent peptisant basique afin de permettre :

- la dispersion des constituants, le ZnO et le(s) liant(s),
- une dissolution partielle des constituants,
- une diminution conséquente de la taille des cristaux de ZnO présents dans le solide.

De préférence, cette première variante est opérée en l'absence de dopant. Par dopant, on entend un élément minéral susceptible de s'adsorber sur la surface des particules de ZnO et/ou de s'incorporer dans la structure cristalline du ZnO.

Sous l'action de la solution aqueuse contenant l'agent peptisant basique, les phénomènes de dispersion et de dissolution des particules de liant et de ZnO opérant lors de l'étape de malaxage par mise en contact des différents constituants sont favorisés. Sans vouloir s'attacher de manière restrictive à une quelconque théorie, il est toutefois possible d'émettre l'hypothèse qu'une meilleure dispersion tant du ZnO que des particules de liant va dans le sens de l'amélioration de la résistance mécanique obtenues *in fine* par ledit procédé de préparation.

En outre, l'utilisation d'un agent peptisant basique lors de la préparation de solides contenant du ZnO utilisés pour la désulfuration de charges gazeuses ou liquides est particulièrement avantageuse. En effet, il a été constaté que l'utilisation d'un agent peptisant basique pour l'élaboration de solide selon cette application permet d'atteindre un accroissement conséquent des capacités en soufre des solides utilisés pour la désulfuration, par rapport aux solides de l'art antérieur.

Dans le cadre de l'invention, la peptisation est mise en oeuvre à l'aide d'une solution aqueuse basique contenant une base inorganique telle que la soude, la potasse, l'ammoniaque, Selon un mode de préparation avantageux, la base inorganique est la soude.

Dans ce cas, le pH de la solution utilisée (mesuré à température ambiante) est supérieur à 8, de préférence à 10, de manière encore préférée supérieur à 12. Ces valeurs de pH sont généralement obtenues en prenant en compte un ratio quantité de base / quantité de ZnO compris entre 1 et 10% poids, de préférence compris entre 2 et 8% poids.

Selon une deuxième variante du procédé de préparation selon l'invention, la peptisation est avantageusement mise en oeuvre à l'aide d'une solution contenant un agent peptisant basique et au moins un dopant.

Par dopant, on entend un élément minéral susceptible de s'adsorber sur la surface des particules de ZnO et/ou de s'incorporer dans la structure cristalline du ZnO. Les dopants peuvent être par exemple des ions alcalins ou alcalino-terreux, ou appartenir à la série des métaux de transition. De façon préférée, le dopant est un ion alcalin ou alcalino-terreux et de manière très préférée, le dopant est l'ion sodium $Na^+$.

Dans le cadre de l'invention, la peptisation est avantageusement mise en oeuvre afin de permettre :

- la dispersion des constituants, le ZnO et le(s) liant(s),
- une dissolution partielle des constituants,
- un dopage du matériau actif, en l'occurrence l'oxyde de zinc selon la présente invention, vis-à-vis de l'absorption des composés soufrés et halogénés.

Classiquement et selon l'art antérieur, un agent peptisant seul est utilisé lors de la mise en forme de la masse. Dans le cadre de l'invention, la peptisation est de préférence mise en oeuvre à l'aide d'une solution aqueuse contenant conjointement un agent peptisant et un composé contenant un élément minéral dopant ou bien à l'aide d'un composé présentant le double effet dopant/peptisant. Selon un mode de préparation avantageux, la soude agit, de par sa composition, à la fois en tant qu'agent peptisant et en tant que dopant puisque l'élément $Na^+$ est alors apporté par l'agent peptisant soude dans le système. Il en est de même pour les bases minérales qui permettent les mêmes effets.

Grâce à l'action combinée de l'agent peptisant et du dopant, les phénomènes de dispersion et de dissolution des particules de liant et de ZnO opérant lors de l'étape de malaxage par mise en contact des différents constituants sont favorisés. Sans vouloir s'attacher de manière restrictive à une quelconque théorie, il est toutefois possible d'émettre l'hypothèse qu'une meilleure dispersion tant du ZnO que des particules de liant va dans le sens de l'amélioration de la résistance mécanique et des capacités en soufre et en chlore des particules obtenues *in fine* par ledit procédé de préparation et constituant la masse de captation selon l'invention.

L'élément minéral dopant est généralement introduit dans la solution aqueuse utilisée pour la dispersion et la peptisation des constituants ZnO et liant(s) lors du malaxage. La teneur en élément minéral dopant introduite au sein des particules finales est généralement comprise entre 0,1 et 10% poids rapporté à la masse sèche de ZnO mise en oeuvre, de préférence entre 0,5 et 6% poids.

La peptisation est opérée en milieu basique, à l'aide d'une solution contenant une base inorganique choisie parmi la soude, la potasse, l'ammoniaque.

Selon l'invention, la peptisation est opérée en employant une solution aqueuse basique. Le pH de la solution (mesuré à température ambiante) est supérieur à 8, de préférence à 10, de manière encore préférée supérieur à 12. Ces valeurs de pH sont généralement obtenues en prenant en compte un ratio quantité de base / quantité de ZnO compris entre 1 et 8% poids, de préférence compris entre 2 et 8% poids.

La quantité de solution liquide mise en oeuvre est ajustée de façon à obtenir, à l'issue de la peptisation et quelle que soit la variante mise en oeuvre, une pâte qui ne coule pas mais qui n'est pas non plus trop sèche afin de permettre l'extrusion lors de l'étape c dans des conditions convenables de pression bien connues de l'homme du métier et dépendantes de l'équipement d'extrusion utilisé. Généralement, la pression d'extrusion est supérieure à 1 MPa, et de préférence comprise entre 3 MPa et 10 MPa.

La mise en contact des réactifs (ZnO, liant, solution aqueuse contenant l'agent peptisant et le dopant) est réalisée par malaxage, en batch ou en continu.

Pour le malaxage en batch, il est connu de l'Homme du métier d'utiliser, par exemple, un malaxeur équipé de bras en Z, à rouleau ou à cames, mais tout autre équipement de malaxage peut également être utilisé.

Les poudres (ZnO et liant) sont d'abord prémélangées avant l'introduction de la solution aqueuse contenant l'agent peptisant basique. Que ce soit pour l'oxyde de zinc ou le liant, il est tout à fait envisageable de procéder à des mélanges de plusieurs sources de ZnO et/ou de liant de type alumine ou argile.

Par ailleurs, il est envisageable, au cours du malaxage, d'incorporer un ou des adjuvants d'extrusion, permettant ainsi d'améliorer l'écoulement de la pâte dans la filière lors de l'extrusion. Ces adjuvants, bien connus de l'Homme du métier, peuvent par exemple être choisis parmi les acides aliphatiques mono-carboxyliques, les composés aromatiques alkylés, les sels d'acide sulphonique, les acides gras, la polyvinyl pyridine, l'alcool polyvinylique, la methylcellulose.

Ces adjuvants sont généralement ajoutés à une teneur comprise entre 1 et 20% poids, de préférence comprise entre 2 et 10% poids, sur la base de la masse totale des constituants introduits dans le malaxeur.

La durée de malaxage est généralement comprise entre 5 et 60 min, de préférence entre 20 et 50 min. La vitesse de rotation des bras du malaxeur est comprise entre 10 et 75 tours/minute, de façon préférée entre 25 et 50 tours/minute.

Description de l'étape c :

Après l'étape de malaxage, la pâte est extrudée, par exemple dans une extrudeuse piston, mono-vis ou bi-vis. Dans le cas d'un mode de préparation en continu, le malaxage peut être couplé avec l'extrusion dans un même équipement. Selon cette mise en oeuvre, l'extrusion de la pâte malaxée peut être réalisée soit en extrudant directement en bout de malaxeur continu de type bi-vis par exemple, soit en reliant un ou plusieurs malaxeurs batch à une extrudeuse. La géométrie de la filière, qui confère leur forme aux extrudés, peut être choisie parmi les filières bien connues de l'Homme du métier. Elles peuvent ainsi être par exemple, de forme cylindrique, trilobée, quadrilobée, cannelée ou à fentes.

Description de l'étape d :

Les extrudés obtenus sont ensuite séchés à une température généralement comprise entre 70 et 160°C sur une durée variant entre 1 et 24 h. Le séchage peut être avantageusement effectué sous air ou bien de préférence sous air humide.

Description de l'étape e :

Les extrudés obtenus sont ensuite traités sous un flux gazeux comprenant de l'oxygène, par exemple de préférence calcinés sous air, ou encore traité en température en présence d'un mélange gazeux comprenant un gaz inerte (par exemple de l'azote) et de l'oxygène. Le mélange gazeux utilisé comprend de préférence au moins 5 % volume, voire de préférence au moins 10 %volume d'oxygène.

La température dudit traitement est généralement comprise entre 200 et 800°C, de préférence entre 300 et 600°C sur une durée comprise entre 1 et 6 h, de préférence entre 2 et 4 h.

A l'issue de la calcination, les extrudés présentent un diamètre compris entre 1 et 5 mm, de manière préférée entre 1,5 et 3,5 mm.

Le solide selon l'invention étant obtenu par extrusion, la forme des particules se rapproche de celle d'un bâtonnet cylindrique mais il n'est pas exclu que les particules soient ensuite, par exemple introduites dans un équipement permettant d'arrondir leur surface, tel qu'un drageoir ou tout autre équipement permettant leur sphéronisation.

Propriétés des solides préparés:

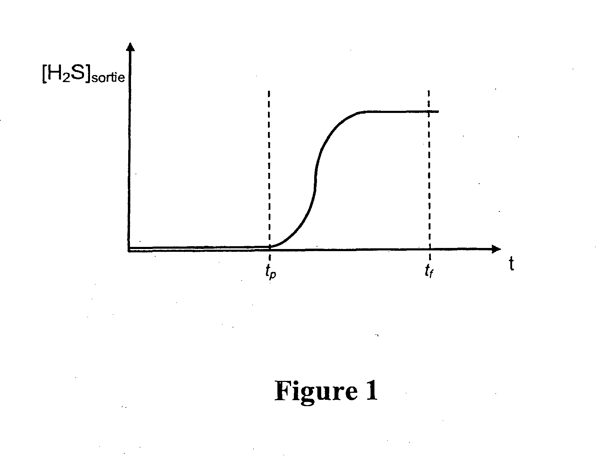

En ce qui concerne leurs propriétés mécaniques, celle-ci sont déterminées par le test d'écrasement grain à grain décrit par la méthode ASTM D 4179-88a. Celle-ci consiste à mesurer la force de rupture de chaque particule d'un échantillon représentatif comprenant au moins 50 particules. Le résultat est pondéré par la longueur de l'extrudé.
La valeur d'EGG est la moyenne des forces de rupture mesurées et ramenées à l'unité de longueur de l'extrudé (exprimée en daN.mm$^{-1}$) pour l'ensemble des particules de l'échantillon.
Dans le cas de la masse de captation selon l'invention, la valeur d'EGG est supérieure à 0,9 daN.mm$^{-1}$ (décaNewton par millimètre de longueur d'extrudé), de préférence supérieure à 1,0 daN.mm$^{-1}$.
La capacité en soufre du solide selon l'invention est mesurée par un test de perçage dont les conditions sont décrites ci-après. Le test est réalisé à une température de 200°C, à pression atmosphérique, et avec une vitesse volumique horaire (VVH) de 2600 h$^{-1}$. Le gaz utilisé pour le test contient 0,9% d'H$_2$S et 50 ppm vol. de COS dans de l'hydrogène. Les teneurs en H$_2$S et en COS présentes dans le gaz en sortie du réacteur, lequel contenant la masse de captation utilisée pour le test, sont déterminées par chromatographie en phase gazeuse.
La capacité en soufre des solides selon l'invention est déterminée en effectuant un bilan matière. La capacité de sulfuration, telle que définie au titre de la présente invention, correspond à la quantité de soufre accumulée par le solide avant perçage (c'est-à-dire au temps $tp$ indiqué sur la figure 1 commentée ci-après), celle-ci étant calculée à l'aide de la relation suivante :

$$q_S = M_S D_{H_2S}^E \int_0^{t_p} \left( 1 - \frac{C_{H_2S}^S}{C_{H_2S}^E} \right) dt$$

avec :

$q_s$: la masse de soufre captée par le solide (en g),
DH2SE : le débit de composés soufrés entrant (en mol.min$^{-1}$),
$M_S$ : la masse molaire du soufre (en g.mol$^{-1}$),
$C_{H2S}^E$ : la teneur en composés soufrés du gaz en entrée,
$C_{H2S}^S$ : eneur en composés soufrés en sortie de réacteur,
$t_p$ : le temps nécessaire au perçage des composés soufrés (en min) tel que représenté sur la figure 1.

Sur la figure 1, $t_p$ est le temps de perçage et $t_f$, le temps de fin de perçage. La capacité en soufre du solide testé est donnée par la relation :

$$C_S = \frac{q_S}{m}$$

avec m la masse d'absorbant mise en oeuvre lors du test.
La capacité de chloration de la masse selon l'invention est mesurée par un test de perçage dont les conditions sont décrites ci-après. Le test est réalisé à une température de 30°C, à pression atmosphérique, et avec une vitesse volumique horaire (VVH) de 1600 h$^{-1}$. Le gaz utilisé pour le test est composé de 500 ppm d'H$_2$O et de 500 ppm d'HCl dans l'azote. La teneur en HCl présente dans le gaz en sortie du réacteur, lequel contenant la masse de captation utilisée pour le test, est déterminée par titrimétrie par NaOH. La capacité de chloration des masses de captation selon l'invention est déterminée en effectuant un bilan matière. La capacité de chloration, telle que définie au titre de la présente invention, correspond à la quantité de chlore accumulée par le solide après perçage (c'est-à-dire au temps $t_f$ de la figure 1), celle-ci étant déterminée par calcul de la quantité de HCl ayant réagi avec NaOH ainsi que par analyse du solide après réaction.
L'invention a également pour objet l'utilisation du solide tel que précédemment décrit en ce qui concerne sa composition et sa méthode d'obtention.
Le solide préparé au moyen du procédé selon l'invention peut être utilisé pour purifier toute charge gazeuse ou liquide contenant entre autres, des composés soufrés tels que H$_2$S, COS et/ou CS$_2$. Ledit solide peut également être mis en oeuvre afin d'éliminer l'HCl présent dans des effluents liquides ou gazeux.
Le solide est utilisé en mettant en contact la charge gazeuse à traiter avec ladite masse dans un réacteur, qui peut être soit un réacteur en lit fixe, soit un réacteur radial, ou bien encore un réacteur en lit fluidisé.

Dans le cadre de l'application concernant la désulfuration de charge gazeuse ou liquide, les conditions d'utilisation dudit solide sont de préférence telles que la pression est comprise entre 0,1 et 25 MPa, de préférence entre 0,1 et 15 MPa, et la température comprise entre 100 et 450°C.

Le solide préparé selon l'invention peut être utilisé pour purifier des charges gazeuses telles que par exemple celles mises en oeuvres dans les installations de cogénération, dans les unités de synthèse chimique telles que les unités de synthèse du méthanol, ou des liquides tels que les hydrocarbures utilisés comme charges dans les unités de reformage catalytique, d'isomérisation, ou d'hydrogénation.

Dans les installations de cogénération, le gaz de synthèse est généralement mis en oeuvre à une pression comprise entre 1 et 10 MPa, et à une température comprise entre 100 et 280°C.

La synthèse du méthanol est généralement mise en oeuvre dans les procédés les plus récents sous une pression comprise entre 1 et 15 MPa, de préférence comprise entre 5 et 10 MPa et à une température comprise entre 150 et 300°C, de préférence comprise entre 220 et 280°C.

En particulier, le solide préparé selon l'invention peut être avantageusement utilisé pour purifier la charge d'une unité de synthèse Fischer-Tropsch, en le mettant en oeuvre dans un réacteur opérant à une pression généralement comprise entre 0,1 et 15 MPa, de préférence comprise entre 1,5 et 5,0 MPa, à une température le plus souvent comprise entre 150 et 400°C, de préférence entre 170 et 350°C.

Dans le cadre de l'application concernant l'élimination des composés halogénés (par exemple la déchloration) d'une charge gazeuse ou liquide, les conditions d'utilisation dudit solide sont de préférence telles que la pression est comprise entre 0,1 et 10 MPa, de préférence entre 1 et 5 MPa, et la température comprise entre 20 et 190°C.

L'invention concerne donc également l'utilisation du solide préparé au moyen du procédé de préparation selon l'invention, pour désulfurer un gaz ou un liquide, à une température comprise entre 100 et 450°C et une pression comprise entre 0,1 et 25 MPa.

Elle concerne aussi, l'utilisation du solide préparé au moyen du procédé de préparation selon l'invention, pour éliminer les composés halogénés d'une charge gazeuse ou liquide, à une température comprise entre 20 et 190°C, et une pression comprise entre 0,1 et 10 MPa.

## EXEMPLES

### Exemples 1 et 2 (comparatifs) :

Les masses de captation référencées 1 et 2 sont préparées par malaxage-extrusion, selon le mode opératoire suivant:

    a) prémélange des poudres comprenant la poudre de ZnO et le liant dans un malaxeur par mise en rotation des bras dudit malaxeur.
    b) malaxage de la pâte obtenue par

        iii. mise en contact des poudres pré mélangées, et de la solution contenant de l'acide nitrique, conduisant à l'obtention d'une pâte (peptisation).
        iv. malaxage de la pâte dans un malaxeur muni de bras à came, pendant 30 minutes avec une vitesse de rotation des bras de 25 tours.min$^{-1}$.

    c) extrusion de la pâte obtenue à l'étape b) à l'aide d'une extrudeuse piston en cylindres de diamètre 3 mm, et de longueur 5 à 10 mm à une pression variable selon les solides.
    d) séchage sous air des extrudés obtenus à l'étape b) à une température de 80°C sur une durée de 15 heures.
    e) calcination à une température variable selon les exemples sur une durée de 2 heures, sous flux d'air.

La masse de captation 3 est préparée selon le mode opératoire suivant :

    b) étape de malaxage dans laquelle on met simultanément en contact les poudres de ZnO et de liant en les introduisant progressivement dans la solution d'acide nitrique , puis en malaxant l'ensemble jusqu'à obtention d'une d'une pâte (peptisation). Puis malaxage de la pâte dans le malaxeur muni de bras à came, pendant 30 minutes avec une vitesse de rotation des bras de 25 tours.min$^{-1}$.
    c) extrusion de la pâte obtenue à l'étape b) à l'aide d'une extrudeuse piston en cylindres de diamètre 3 mm, et de longueur 5 à 10 mm à une pression variable selon les solides.
    d) séchage sous air des extrudés obtenus à l'étape b) à une température de 80°C sur une durée de 15 heures.
    e) calcination à une température variable selon les exemples sur une durée de 2 heures, sous flux d'air.

Un liant de type boehmite ou argile, selon les cas, a été utilisé pour les exemples.

La formulation des solides est donnée dans les tableaux 1 et 2. La teneur en ZnO est de 70 ou 95% poids selon les solides. La quantité d'acide $HNO_3$ est de 2% poids rapportée à la quantité de ZnO introduite.

La résistance mécanique des extrudés est déterminée par un essai mécanique de type écrasement grain à grain tel que décrit précédemment.

**• Exemple 1 (comparatif) :**

Cet exemple fait état des caractéristiques et performances des solides 1 et 2, pour lesquels un ZnO commercial est utilisé, le liant étant une boehmite commerciale. Les teneurs massiques en ZnO des solides 1 et 2 sont respectivement de 70 et 95% en poids, et les teneurs massiques en liant boehmite respectivement de 30 et 5% en poids.

Au cours de l'extrusion, la pression varie entre 7,7 et 9,4 MPa pour le solide 1.

Au cours de l'extrusion, la pression varie entre 3,5 et 5,4 MPa pour le solide 2.

Les extrudés sont calcinés pendant 2 h à 650°C.

Tableau 1

| Désignation | Taux de ZnO (%) | Liant | Taux $HNO_3$ (%) | Soufre capté à $t_p$ (gS/gsolide) | EGG (daN.mm$^{-1}$) |
|---|---|---|---|---|---|
| solide 1 | 70 | boehmite | 2 | 0,052 | 1,0 |
| solide 2 | 95 | boehmite | 2 | 0,065 | 0,7 |

L'augmentation de la teneur en ZnO conduit à une augmentation de la capacité d'absorption en soufre, mais induit également une détérioration des propriétés de résistance mécanique des masses de captation selon ce mode opératoire. La résistance mécanique du solide 2 est trop faible compte tenu des contraintes liées à une utilisation industrielle, et de surcroît la capacité d'absorption en soufre reste médiocre malgré la teneur élevée en ZnO.

**• Exemple 2 (comparatif) :**

Cet exemple fait état des caractéristiques et performances du solide 3, pour lequel un ZnO commercial est utilisé, et le liant est une argile de type kaolinite. Les teneurs massiques en ZnO et en argile du solide 3 sont respectivement de 95 et 5% en poids.

Au cours de l'extrusion, la pression varie entre 3,8 et 5,6 MPa pour le solide 3.

Les extrudés sont calcinés pendant 2 h à 500°C.

Tableau 2

| Désignation | Taux de ZnO (%) | Liant | Taux $HNO_3$ (%) | Soufre capté à $t_p$ (gS/gsolide) | EGG (daN.mm$^{-1}$) |
|---|---|---|---|---|---|
| solide 3 | 95 | argile | 2 | 0,053 | 0,6 |

La capacité en soufre du solide reste un niveau faible comparée à celle des solides selon l'invention:

**Exemples 3 à 8 (selon l'invention):**

Dans les exemples 3 à 8, les solides selon l'invention sont préparés selon le mode opératoire suivant :

a) prémélange des poudres comprenant la poudre de ZnO et le liant dans un malaxeur par mise en rotation des bras dudit malaxeur.

b) malaxage de la pâte obtenue par

i. mise en contact des poudres pré mélangées, et de la solution contenant l'agent peptisant éventuellement additionnée d'un composé inorganique, conduisant à l'obtention d'une pâte (peptisation).

ii. malaxage de la pâte dans un malaxeur muni de bras à came, pendant 30 minutes avec une vitesse de rotation des bras de 25 tours.min$^{-1}$.

c) extrusion de la pâte obtenue à l'étape b) à l'aide d'une extrudeuse piston en cylindres de diamètre 3 mm, et de longueur 5 à 10 mm à une pression variable selon les solides.

d) séchage sous air des extrudés obtenus à l'étape b) à une température de 80°C sur une durée de 15 heures.
e) calcination à une température variable selon les exemples sur une durée de 2 heures, sous flux d'air.

Un liant de type boehmite ou argile, selon les cas, a été utilisé pour les exemples.
Selon les exemples, une solution peptisante de nature variable a été mise en oeuvre.
La formulation des solides 4 à 8 correspond à 95% en poids de ZnO, et 5% en poids de liant.
Le solide 9 est préparé selon le même mode opératoire, la quantité de ZnO mise en oeuvre étant de 58% en poids rapporté à la masse totale de solide.
La résistance mécanique des extrudés est déterminée par un essai mécanique de type écrasement grain à grain tel que décrit précédemment.

### • Exemple 3 (invention):

Cet exemple fait état des propriétés du solide 4, pour lequel le même ZnO commercial mis en oeuvre dans les exemples précédents est utilisé, et le liant est une boehmite commerciale.
La peptisation est effectuée à l'aide d'une solution de soude NaOH, le taux de base NaOH exprimé par rapport à la masse de ZnO introduite est fixé à 2% poids. De ce fait la teneur massique en ion sodium $Na^+$ est de 1,2% par rapport à la quantité de ZnO introduite.
La pression d'extrusion est comprise entre 5,0 et 8,0 MPa.
Les extrudés sont calcinés pendant 2 h à 650°C.

Tableau 3

| Désignation | Taux de ZnO (%) | Liant | Taux NaOH (%) | Taux $Na^+$ (%) | Soufre capté à $t_p$ (gS/gsolide) | EGG (daN.mm$^{-1}$) |
|---|---|---|---|---|---|---|
| solide 4 | 95 | boehmite | 2 | 1,2 | 0,107 | 1,1 |

### • Exemple 4 (invention):

Cet exemple fait état des propriétés du solide 5, pour lequel un ZnO commercial est utilisé, et le liant est une argile de type kaolinite.
La peptisation est effectuée à l'aide d'une solution de soude NaOH, le taux de base NaOH exprimé par rapport à la masse de ZnO introduite est fixé à 4% poids. De ce fait la teneur massique en ion sodium $Na^+$ est de 2,4% par rapport à la quantité de ZnO introduite.
Au cours de l'extrusion, la pression varie entre 5,0 et 8,0 MPa.
Les extrudés ont été calcinés pendant 2 h à 500°C.

Tableau 4

| Désignation | Taux de ZnO (%) | Liant | Taux NaOH (%) | Taux $Na^+$ (%) | Soufre capté à $t_p$ (gS/gsolide) | EGG (daN.mm$^{-1}$) |
|---|---|---|---|---|---|---|
| solide 5 | 95 | argile | 4 | 2,4 | 0,142 | 1,1 |

### • Exemple 5 (invention):

Cet exemple fait état des propriétés du solide 6, pour lequel un ZnO commercial est utilisé, et le liant est une boehmite.
La peptisation est effectuée à l'aide d'une solution de soude NaOH, le taux de base NaOH exprimé par rapport à la masse de ZnO introduite est fixé à 4% poids. De ce fait la teneur massique en ion sodium $Na^+$ est de 2,4% par rapport à la quantité de ZnO introduite.
Au cours de l'extrusion, la pression varie entre 5,3 et 6,5 MPa.
Les extrudés sont calcinés pendant 2 h à 500°C.

Tableau 5

| Désignation | Taux de ZnO (%) | Liant | Taux NaOH (%) | Taux Na$^+$ (%) | Soufre capté à $t_p$ (gS/gsolide) | EGG (daN.mm$^{-1}$) |
|---|---|---|---|---|---|---|
| solide 6 | 95 | boehmite | 4 | 2,4 | 0,123 | 1,1 |

#### • Exemple 6 (invention):

Cet exemple fait état des propriétés du solide 7, pour lequel un ZnO commercial est utilisé, et le liant est une argile de type kaolinite.

La peptisation est effectuée à l'aide d'une solution basique d'ammoniaque, le taux de base NH$_4$OH exprimé par rapport à la masse de ZnO introduite est fixé à 2% en poids

Au cours de l'extrusion, la pression varie entre 6,0 et 7,5 MPa.

Les extrudés sont calcinés pendant 2 h à 500°C.

Tableau 6

| Désignation | Taux de ZnO (%) | Liant | Taux NH$_4$OH (%) | Soufre capté à $t_p$ (gS/gsolide) | EGG (daN.mm$^{-1}$) |
|---|---|---|---|---|---|
| solide 7 | 95 | argile | 2 | 0,130 | 1,1 |

#### • Exemple 7 (comparatif) :

Cet exemple fait état des propriétés du solide 8, pour lequel un ZnO commercial est utilisé, et le liant est une argile de type kaolinite.

La peptisation est effectuée à l'aide d'une solution acide de HNO$_3$ additivée de nitrate de sodium. Le quantité de HNO$_3$ est de 3% en poids par rapport à la quantité de ZnO introduite. Le dopant est l'ion sodium Na$^+$, dont la teneur introduite lors de la peptisation est de 2% en poids par rapport à la masse sèche de ZnO.

Au cours de l'extrusion, la pression varie entre 4,5 et 7,0 MPa.

Les extrudés sont calcinés pendant 2 h à 500°C.

Tableau 7

| Désignation | Taux de ZnO (%) | Liant | Taux HNO$_3$ (%) | Taux de Na$^+$ (%) | Soufre capté à $t_p$ (gS/gsolide) | EGG (daN.mm$^{-1}$) |
|---|---|---|---|---|---|---|
| solide 8 | 95 | argile | 3 | 2 | 0,125 | 1,2 |

Ces exemples illustrent la portée de l'invention sans toutefois être limitatifs et soulignent l'apport du mode opératoire selon l'invention sur les performances des masses de captation. Les capacités d'absorption en soufre des solides selon l'invention décrits dans les exemples 3 à 7 sont supérieures aux capacités des solides préparés selon le mode opératoire classique décrits dans les exemples 1 et 2, tout en présentant des propriétés mécaniques supérieures ou égales à 0,9 daN.min$^{-1}$ qui permettent leur utilisation dans un réacteur en lit fixe.

#### • Exemple 8 (comparatif):

Cet exemple fait état des propriétés du solide 9 pour lequel un ZnO commercial est utilisé, et deux liants boehmite et argile ont été mis en oeuvre. La quantité de boehmite employée pour la mise en forme du solide est ici de 39% en poids par rapport à la masse totale de l'échantillon, et la teneur en argile de type kaolinite est de 3% en poids.

La peptisation est effectuée à l'aide d'une solution d'acide nitrique, le taux d'acide HNO$_3$ exprimé par rapport à la masse de ZnO introduite est fixé à 1,3% en poids.

Le taux de sodium Na$^+$ introduit lors de la peptisation est de 0,1% par rapport à la masse de ZnO introduite.

Au cours de l'extrusion, la pression varie entre 6,0 et 7,5 MPa.

Les extrudés sont calcinés pendant 2 h à 700°C.

Tableau 8

| Désignation | Taux de ZnO (%) | Liants | Taux $HNO_3$ (%) | Taux $Na^+$ (%) | Chlore capté à $t_f$ (gCl/gsolide) | EGG (daN.mm$^{-1}$) |
|---|---|---|---|---|---|---|
| solide 9 | 58 | boehmite 39% + argile 3% | 2 | 0,1 | 0,26 | 1,3 |

La capacité en chlore du solide 9 est particulièrement élevée, étant égale à 0,26 gCl/solide ce qui correspond à une capacité massique de 26% dans les conditions du test de perçage.

**Revendications**

1.  Procédé de préparation d'un solide comprenant du ZnO et un liant, ledit procédé comprenant les étapes suivantes :

    a) pré mélange des poudres comprenant au moins une poudre de ZnO, au moins un liant,
    b) malaxage d'une pâte obtenue par:

       i) mise en contact des poudres pré mélangées, et d'une solution contenant un agent peptisant, conduisant à l'obtention d'une pâte,
       ii) malaxage de la pâte,

    c) extrusion de la pâte obtenue à l'étape b) à une pression comprise entre 3 et 10 MPa,
    d) séchage des extrudés obtenus à l'étape c) à une température comprise entre 70 et 160°C sur une durée comprise entre 1 et 24 heures,
    e) calcination des extrudés séchés à une température comprise entre 200 et 800°C sur une durée variant entre 1 et 6 heures, sous un flux gazeux comprenant de l'oxygène,

    et dans lequel l'agent peptisant mis en oeuvre à l'étape b) est un agent peptisant basique choisi dans le groupe formé par la soude, la potasse, l'ammoniaque

2.  Procédé de préparation selon la revendication 1 dans lequel le liant est une argile.

3.  Procédé de préparation selon la revendication 1 ou 2, dans lequel la peptisation est mise en oeuvre à l'aide d'une solution contenant ledit agent peptisant et au moins un dopant.

4.  Procédé selon la revendication 3, dans lequel le dopant est sélectionné dans le groupe constitué par: les ions alcalins ou alcalino-terreux, les métaux de transition.

5.  Procédé selon la revendication 3, dans lequel le dopant est un ion alcalin ou alcalino-terreux.

6.  Procédé selon la revendication 1 ou 2, dans lequel la peptisation est mise en oeuvre à l'aide d'une solution aqueuse contenant conjointement un agent peptisant et un composé contenant un élément minéral dopant ou bien à l'aide d'un composé présentant le double effet dopant/peptisant.

7.  Procédé selon la revendication 1 ou 2, dans lequel l'agent peptisant mis en oeuvre à l'étape b) est la soude et le ratio quantité de soude / quantité de ZnO est compris entre 1 et 10% poids.

8.  Procédé selon l'une des revendications 1 à 7, dans lequel le liant mis en oeuvre à l'étape a) est une alumine ou une boehmite.

9.  Utilisation du solide préparé au moyen du procédé selon l'une des revendications 1 à 8, pour désulfurer un gaz ou un liquide, pour une température comprise entre 100 et 450°C et une pression comprise entre 0,1 et 25 MPa.

10. Utilisation du solide préparé au moyen du procédé selon l'une des revendications 1 à 9, pour éliminer les composés halogénés d'une charge gazeuse ou liquide, pour une température comprise entre 20 et 190°C, et une pression comprise entre 0,1 et 10 MPa.

**Patentansprüche**

1. Verfahren zur Herstellung eines Feststoffs, umfassend ZnO und ein Bindemittel, wobei das Verfahren die folgenden Schritte umfasst:

   a) Vormischen der Pulver, umfassend mindestens ein ZnO-Pulver, mindestens ein Bindemittel,
   b) Verkneten einer Paste, erhalten durch:

      i) Inkontaktbringen der vorgemischten Pulver und einer Lösung, enthaltend ein Peptisiermittel, was zum Erhalt einer Paste führt,
      ii) Verkneten der Paste,

   c) Extrudieren der in Schritt b) erhaltenen Paste bei einem Druck im Bereich zwischen 3 und 10 MPa,
   d) Trocknen der in Schritt c) erhaltenen Extrudate bei einer Temperatur im Bereich zwischen 70 und 160 °C für eine Dauer im Bereich zwischen 1 und 24 Stunden,
   e) Kalzinieren der getrockneten Extrudate bei einer Temperatur im Bereich zwischen 200 und 800 °C für eine Dauer, die zwischen 1 und 6 Stunden variiert, unter einem Gasstrom, der Sauerstoff umfasst,

   und wobei das in Schritt b) eingesetzte Peptisiermittel ein basisches Peptisiermittel ist, ausgewählt aus der Gruppe gebildet aus Soda, Kali, Ammoniak.

2. Verfahren zur Herstellung nach Anspruch 1, wobei das Bindemittel ein Ton ist.

3. Verfahren zur Herstellung nach Anspruch 1 oder 2, wobei die Peptisierung mithilfe einer Lösung durchgeführt wird, die das Peptisiermittel und mindestens ein Dotiermittel enthält.

4. Verfahren nach Anspruch 3, wobei das Dotiermittel ausgewählt ist aus der Gruppe bestehend aus: alkalischen oder erdalkalischen Ionen, Übergangsmetallen.

5. Verfahren nach Anspruch 3, wobei das Dotiermittel ein alkalisches oder erdalkalisches Ion ist.

6. Verfahren nach Anspruch 1 oder 2, wobei die Peptisierung mithilfe einer wässrigen Lösung, die gleichzeitig ein Peptisiermittel und eine Verbindung enthält, die ein mineralisches Dotierelement enthält, oder auch mithilfe einer Verbindung, die gleichzeitig eine Dotier- und Peptisierwirkung aufweist, durchgeführt wird.

7. Verfahren nach Anspruch 1 oder 2, wobei das in Schritt b) eingesetzte Peptisiermittel Soda ist und das Verhältnis der Sodamenge zur ZnO-Menge im Bereich zwischen 1 und 10 Gew.-% liegt.

8. Verfahren nach einem der Ansprüche 1 bis 7, wobei das in Schritt a) eingesetzte Bindemittel ein Aluminiumoxid oder ein Böhmit ist.

9. Verwendung des mittels des Verfahrens nach einem der Ansprüche 1 bis 8 hergestellten Feststoffs, um ein Gas oder eine Flüssigkeit zu entschwefeln, für eine Temperatur im Bereich zwischen 100 und 450 °C und einen Druck im Bereich zwischen 0,1 und 25 MPa.

10. Verwendung des mittels des Verfahrens nach einem der Ansprüche 1 bis 9 hergestellten Feststoffs, um halogenierte Verbindungen aus einer gasförmigen oder flüssigen Beschickung zu entfernen, für eine Temperatur im Bereich zwischen 20 und 190 °C und einen Druck im Bereich zwischen 0,1 und 10 MPa.

**Claims**

1. A process for preparing a solid comprising ZnO and a binder, said process comprising the following steps:

   a) pre-mixing powders comprising at least one ZnO powder and at least one binder;

b) mixing a paste obtained by:

    i) bringing the pre-mixed powders and a solution containing a peptizing agent into contact, leading to the production of a paste;
    ii) mixing the paste;

c) extruding the paste obtained in step b) at a pressure in the range 3 to 10 MPa;
d) drying the extrudates obtained in step c) at a temperature in the range 70°C to 160°C for a period in the range 1 to 24 hours;
e) calcining the dried extrudates at a temperature in the range 200°C to 800°C for a period in the range 1 to 6 hours, in a gaseous stream comprising oxygen;

and in which the peptizing agent used in step b) is a basic peptizing agent selected from the group formed by sodium hydroxide, potassium hydroxide, ammonia.

2. A preparation process according to claim 1, in which the binder is a clay.

3. A preparation process according to claim 1 or 2, in which peptization is carried out using a solution containing said peptizing agent and at least one dopant.

4. A process according to claim 3, in which the dopant is selected from the group constituted by: alkali or alkaline-earth ions, and transition metals.

5. A process according to claim 3, in which the dopant is an alkali or alkaline-earth ion.

6. A process according to claim 1 or claim 2, in which the peptization is carried out using an aqueous solution jointly containing a peptizing agent and a compound containing a mineral doping element or using a composition having a dual dopant/peptization effect.

7. A process according to claim 1 or 2, in which the peptizing agent used in step b) is sodium hydroxide and the ratio of the quantity of sodium hydroxide/quantity of ZnO is in the range 1% to 10% by weight.

8. A process according to one of claims 1 to 7, in which the binder used in step a) is alumina or a boehmite.

9. Use of a solid prepared using a process according to one of claims 1 to 8, to desulphurize a gas or a liquid, for a temperature in the range 100°C to 450°C and a pressure in the range 0.1 to 25 MPa.

10. Use of a solid prepared using a process according to one of claims 1 to 9, to eliminate halogenated compounds from a liquid or gaseous feed, at a temperature in the range 20°C to 190°C, and a pressure in the range 0.1 to 10 MPa.

**Figure 1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2295782 B1
- US 4071609 A
- FR 2718658 B1
- US 5866503 A
- US 4088736 A